# EUROPEAN PATENT SPECIFICATION

(11) **EP 3 870 639 B1**
(45) Date of publication and mention of the grant of the patent: **10.09.2025**
(21) Application number: 19798723.3
(22) Date of filing: 10.10.2019
(51) Int. Cl.: C08J 11/06, B29B 17/02

(54) **SILICON NANOSTRUCTURES AS LUMINESCENT MARKERS FOR THE RECYCLING OF PLASTIC**
SILIZIUM-NANOSTRUKTUREN ALS LUMINESZIERENDE MARKER ZUM RECYCLING VON KUNSTSTOFFEN
NANOSTRUCTURES EN SILICIUM EN TANT QUE MARQUEURS LUMINESCENTS POUR LE RECYCLAGE DU PLASTIQUE

(30) Priority: 26.10.2018 IT 201800009809
(43) Date of publication of application: 01.09.2021
(73) Proprietor: Alma Mater Studiorum - Università di Bologna, 40126 Bologna (IT)
(72) Inventor: CERONI, Paola, 40126 Bologna (IT); ROMANO, Francesco, 40126 Bologna (IT)
(74) Representative: Di Giovine, Paolo
(86) International application number: PCT/IB2019/058647
(87) International publication number: WO 2020/084376

(56) References cited:
- WO-A1-2014/207313
- WO-A1-2015/144114
- GB-A- 2 330 409
- FATEMEH SANGGHALEH ET AL: "Paper;Exciton lifetime measurements on single silicon quantum dots;Exciton lifetime measurements on single silicon quantum dots", NANOTECHNOLOGY, INSTITUTE OF PHYSICS PUBLISHING, BRISTOL, GB, vol. 24, no. 22, 3 May 2013 (2013-05-03), pages 225204, XP020245331, ISSN: 0957-4484, DOI: 10.1088/0957-4484/24/22/225204
- IGNAZ M. D. HÖHLEIN: "Photoluminescent silicon nanocrystal-polymer hybrid materials via surface initiated reversible addition-fragmentation chain transfer (RAFT) polymerization", NANOSCALE, vol. 7, no. 17, 1 January 2015 (2015-01-01), United Kingdom, pages 7811 - 7818, XP093168784, ISSN: 2040-3364, DOI: 10.1039/C5NR00561B
- E. MARIS: "Polymer tracer detection systems with UV fluorescence spectrometry to improve product recyclability", MINERALS ENGINEERING, vol. 29, 1 March 2012 (2012-03-01), AMSTERDAM, NL, pages 77 - 88, XP093168906, ISSN: 0892-6875, DOI: 10.1016/j.mineng.2011.09.016
- FOMIN PETR ET AL: "Evaluation of time-gated fluorescence spectroscopy for the classification of fluorescently labeled plastics", 2015 IEEE INTERNATIONAL INSTRUMENTATION AND MEASUREMENT TECHNOLOGY CONFERENCE (I2MTC) PROCEEDINGS, IEEE, 11 May 2015 (2015-05-11), pages 722 - 727, XP033171170, DOI: 10.1109/I2MTC.2015.7151357
- PETR FOMIN: "Optimized Time-Gated Fluorescence Spectroscopy for the Classification and Recycling of Fluorescently Labeled Plastics", APPLIED SPECTROSCOPY., vol. 71, no. 5, 29 August 2016 (2016-08-29), US, pages 919 - 928, XP093168892, ISSN: 0003-7028, Retrieved from the Internet <URL:http://journals.sagepub.com/doi/full-xml/10.1177/0003702816664104> DOI: 10.1177/0003702816664104
- DATABASE WPI Week 201658, Derwent World Patents Index; AN 2016-28888W, XP002790570
- DATABASE WPI Week 201622, Derwent World Patents Index; AN 2015-793953, XP002790571

## Description

### Technical field of the invention

The invention relates to the use of silicon nanostructures as luminescent markers for plastics. Polymers in which the nanostructures described herein have been uniformly dispersed acquire luminescence with a long life span. This acquired characteristic makes it possible to use an optical recognition technique which consists of applying a delay between excitation and analysis of the sample. Applying a delay to the reading eliminates spurious signals, preserving the luminescence of the silicon nanostructures, which thus has an advantage in respect of sensitivity and reduces the amount of marker necessary.

### Prior art

Plastics form a family of materials which modern society cannot do without, but at the same time may also constitute a threat to our planet's ecosystem. The only sustainable solution in the short term is recycling. However, many polymeric materials are not currently recycled because a low cost and efficient automated separation system has not yet been developed. Also for plastic materials that are recycled, the current problem is that the product obtained after the recycling is always of lower worth than the starting product due to the low purity of the recycled plastic material. In view of a circular economy, one of the major challenges in the field of plastic material recycling is therefore the separation of the various waste materials into single materials with a high degree of purity. Contaminations less than 5% may significantly reduce the quality of the final product. This problem is even greater for single-use products, which must observe even more stringent standards (see Ministerial Decree 113/2010 in relation to the recycling of the PET from mineral water bottles).

Current separation facilities use people or automated systems which employ various types of detector (e.g. optical, X-ray, tribological). The mechanical systems are more successful, and those that employ an optical recognition system are of particular interest due to the simplicity of the required tooling and reproducibility of the results.

Systems that employ a reflection of infrared light and recording of the reflected light have been used since the 1990s. These systems have limitations with regard to the separation of complex mixtures of polymers of different compositions. The main obstacle is that of recognising black-coloured plastic insofar as the colorant used absorbs most of the light required by the detector. This problem impedes the recycling of five hundred thousand tonnes of plastic in Europe alone.

The presence of combinations of colorants, fillers and additives may result in many different responses to the same material. However, systems based on NIR (near infrared) reflection spectroscopy are currently those that give the best efficiency and are the most common on the market.

A recently proposed solution is that of inserting fluorescent pigments (markers) into the virgin materials. By inserting various combinations of markers, codes that identify an elevated number of different materials can be obtained. This system, however, does not solve the problem of autofluorescence, caused by emitting molecules that are already present in many plastic materials and may cover the signals of the markers.

Patent EP3122814 uses the measurement of the life spans and emission of the plastic materials themselves (fluorescence fingerprint of the material), or labelled by one or more fluorescent markers. The excitation of the sample occurs by means of irradiation with ultra-violet light, and the stimulated emission is read in the visible range. The same material, however, may have various substances within it, which may interfere with the reading and impede unambiguous recognition.

This approach has a number of defects. The pigments used as markers may be visible to the human eye, interfering with the colour of the final product. The life spans of the luminescence of these markers are in the order of nanoseconds, requiring rather costly equipment, and are not long enough to eliminate all the background noise.

The markers proposed are formed in addition by organic molecules and in this regard have a low resistance to light and to high temperatures WO2014207313 discloses doping of rubber with semiconducting nanocrystals such as quantum dots but does not disclose that such structures are Si-based, nor that they are used for separating/sorting polymers. The use of fluorescent markers for separating/sorting polymers is known in the art, but such markers based on Si are not known. See for example: GB2330409; WO2015144114; Minerals Engineering, Volume 29, 2012, Pages 77-88 (doi:10.1016/j.mineng.2011.09.016); Applied Spectroscopy, Volume 71, Issue 5, 2017, Pages 919-928 (doi:10.1177/0003702816664104); 2015 IEEE International Instrumentation and Measurement Technology Conference (I2MTC) Proceedings, Pisa, Italy, 2015, pp. 722-727 (doi:10.1109/ I2MTC.2015.7151357). Si-based fluorescent quantum dots are known in the art, but not as markers for separating/sorting polymers. See for example: CN105542746; CN105085999; Nanotechnology, Volume 24, Issue 22, 2013, 225204 (doi:10.1088/0957-4484/24/22/225204); Nanoscale, Volume 7, Issue 17, 2015, pages 7811-7818 (doi:10.1039/ C5NR00561B).

The object of the present invention is to provide methods and systems for separating plastic materials, in particular for separating different plastic materials intended for recycling, which methods and systems do not have any of the disadvantages of the methods and systems known from the prior art.

### Summary of the invention

The invention proposed herein refers to a method and system for separating plastic materials, in particular for separating different plastic materials intended for recycling, by inserting luminescent compounds into said plastic materials at low concentrations (ppm - parts per million or sub-ppm), the luminescent compounds being formed by silicon nanostructures. Such nanostructures are hybrid materials formed by an inner silicon nucleus passivated with alkyl chains by means of a silicon-carbon bond that makes the system highly stable. The diameter of the silicon nucleus may vary from a diameter of 2 to a diameter of 15 nanometres. Due to the phenomenon of quantum confinement, the band gap within this range changes as the dimensions vary. This means that the energy of the photons emitted by the nucleus varies as the dimensions of the nucleus vary. It is therefore possible to obtain a multitude of different emission colours by means of a single material simply by changing the parameters during the synthesis of said material. Plastic materials into which silicon nanostructures have been inserted may be recognised unambiguously by an optical detector with a source of excitation in the ultra-violet range and by applying a delay to the reading (time-gated detection). The application of a delay makes it possible to eliminate background noise caused by the light of the excitation source and caused by the inherent autofluorescence of the plastic, thus improving the yield of the separation and recycling process, and the purity of the plastic materials obtained. The advantage of the silicon nanostructures is caused not only by the possibility of obtaining an improved contrast for the possibility of using the time-gated detection, but also by the fact that they absorb and emit light with wavelengths that are not perceptible to the human eye are thus invisible. In fact, it is possible to use nanostructures with emissions close to the infrared range, which are not perceived by the human eye, for those materials for which it is desired to maintain a certain transparency. The concentrations of silicon used in the nanostructures as described in this invention are also low, so as not to be visible anyway to the naked eye. The colour of the material is therefore influenced by the marker proposed in this invention. This feature is of key importance above all for the application in materials for the food packaging industry, where the marketing requirements are imperative.

A first aspect of the invention relates to the use of crystalline silicon nanostructures or silicon quantum dots to separate plastic materials, in particular to separate different plastic materials intended for recycling.

A second aspect of the invention relates to plastic materials characterised in that the polymeric matrix of said materials comprises nanostructures of crystalline silicon and/or silicon quantum dots.

A third aspect of the invention relates to a method for separating plastic materials, in particular for separating different plastic materials intended for recycling, comprising the following steps:
i) exciting a plurality of plastic materials by means of a UV lamp, wherein said plastic materials comprise nanostructures of crystalline silicon and / or silicon quantum dots;
ii) detecting the signal emitted by said plurality of plastic materials by means of a light detector in the visible and/or in the infrared range;
iii) separating the plastic material based on the detected signals.

A fourth aspect of the invention relates to an automatic system for separating different plastic materials intended for recycling, said system comprising:
- means for transporting a plurality of plastic materials in a distanced manner;
- an ultraviolet light source able to excite a plastic material comprising nanostructures of crystalline silicon and / or silicon quantum dots;
- a detector of visible and infrared light;
- means for the sorting of said plastic materials.

### Brief description of the drawings

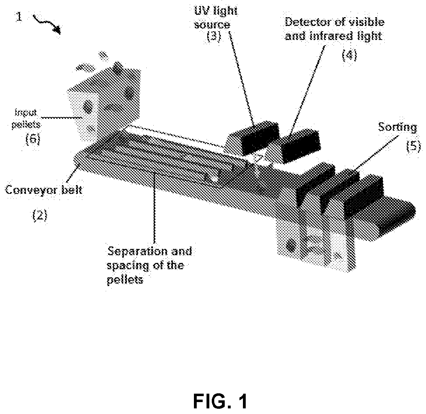

Figure 1. Figure 1 shows diagram indicating the components of the system for separating the plastic materials and implementation of same in accordance with one embodiment.

### Description:

A first aspect of the invention relates to a plastic material in which the polymeric matrix of said material comprises nanostructures of crystalline silicon and/or silicon quantum dots.

The plastic material will be, for example, a thermoplastic material, in particular a material selected from polyethylene, ethylene vinyl acetate, polyoxymethylene, polystyrene, polyamides, polyethylene terephthalate, polycarbonates, polypropylene, polyvinyl chloride, polyether ether ketone, aramides, polyimides (for example Kapton), polysulfone or their mixtures.

The nanostructures of crystalline silicon or silicon quantum dots will have, for example, a diameter of the nanocrystalline between 1 and 20 nanometres.

The silicon nanostructures (SiNCs) may be obtained by thermal disproportion and subsequent treatment with hydrofluoric acid.

For example, they may be obtained by thermal disproportion of hydrogen silsesquioxane in order to form the crystals in a silicon matrix (SiO2) and subsequent treatment with hydrofluoric acid in order to obtain terminated hydrogen crystals (which have hydrogen silicon bonds at the surface), or by any other synthetic method described in the literature. References: from Cheng X. et al. (Chem. Soc. Rev. 2014, April 21; 43 (8) : 2680-700, DOI: 10.1039/c3cs60353a) and J.G. Veinot (Chem. Comm. 2006, July 25, 4160 - 4168). For example, with hydrogen silsesquioxane used as precursor.

In accordance with one embodiment, the nanostructures may be passivated with alkyl chains or any functional organic or inorganic or hybrid group, possibly partially or totally oxidised or doped. Any of the above-described passivations could be applied, provided that the following remain: according to the invention luminescence with long emission life spans, between 1 and 150 µs, luminescence quantum yields between 1 and 100%, and /or emissions with a wavelength between 400 and 1000 nm.

The passivation reactions will be performed as described in the literature, for example as thermal, radical or catalysed hydrosilylation.

In accordance with one embodiment, the silicon nanostructures comprises silicon and/or porous silicon nanowires measuring up to 200 nm in size.

The nanostructures of crystalline silicon or silicon quantum dots are dispersed in the matrix of the plastic material, preferably in a concentration between 1 and 100 ppm or between 1 and 100 ppb, and the nanostructures are used as markers in these concentrations.

In addition, one embodiment of the invention provides the use of silicon nanostructures with different emissions (of different colours) which can be used in different combinations within the same plastic material so as to obtain a code capable of identifying a greater number of materials. By introducing n different markers, it is thus possible to obtain 2ⁿ-1 different combinations. The silicon-based materials described are also resistant to elevated temperatures up to 500°C, and have high photostability over time, up to a number of months/years.

The nanostructures of crystalline silicon or silicon quantum dots may be present in the form of: solid powder; solution in appropriate solvent; or dispersed previously in appropriate polymer for extrusion.

A further aspect of the invention relates to a preparation method in which the nanostructures of crystalline silicon and/or silicon quantum dots can be dispersed in a polymeric matrix, preferably thermoplastic, by means of one of the following approaches:
a) diluted in the monomer prior to a process of polymerisation, they are in fact compatible with the most common polymerisation processes; and/or
b) they can be dispersed as solids in the polymer flakes, whether new or already recycled, prior to an extrusion process.

Another aspect of the invention relates to the use of nanostructures of crystalline silicon or silicon quantum dots to separate plastic materials, in particular to separate different plastic materials intended for recycling. Nanostructures of crystalline silicon and/or silicon quantum dots can be used in accordance with any of the embodiments described herein.

In particular, the nanostructures can be used to separate thermoplastics of polyethylene, ethylene vinyl acetate, polyoxymethylene, polystyrene, polyamides, polyethylene terephthalate, polycarbonates, polypropylene, polyvinyl chloride, polyether ether ketone, aramides, polyimides (for example Kapton), polysulfone or their mixtures.

A further aspect of the invention relates to a method for separating plastic materials, in particular for separating different plastic materials intended for recycling, comprising the following steps:
i) exciting a plurality of plastic materials by means of a UV lamp, wherein said plastic materials comprise nanostructures of crystalline silicon and / or silicon quantum dots;
ii) detecting the signal emitted by said plurality of plastic materials by means of a light detector in the visible and in the infrared range;
iii) separating the plastic material based on the detected signals.

The plastic materials to be separated in the method described herein will be plastic materials comprising nanostructures of crystalline silicon and/or silicon quantum dots in accordance with any of the embodiments described above.

The plastic materials will be any product made of plastic, for example bottles, food packagings, etc., that is intended for recycling. The separation method may comprise a subsequent step prior to step i) of excitation, in which the plastic material is reduced to pieces/flakes/pellets.

The luminescent pellets may be recognised by an automated machine formed by a conveyor belt which moves the flakes through three main parts: 1) a separating system in which the pellets are suitable distanced from one another; 2) ultra-violet light source and detector in the visible and infrared range; 3) sorting and gathering system, as described in figure 1.

The illumination system may be formed by an LED lamp with UV emission, whereas the detector system is formed by a detector that detects light in the visible and infrared range. The signal may be obtained by reading a life span in the order of tens or hundreds of microseconds and the intensity of the light emitted by the sample. Considering an approximate time of 100 microseconds for the entire recognition process, that is to say excitation of the sample, reception of the signal by the detector, and transmission of the signal to the control and sorting system. In another aspect the present invention thus relates to an automatic system (1) for separating plastic materials as described herein, comprising:
- means for transporting (2) a plurality of plastic materials in a distanced manner;
- an ultraviolet light source (3) able to excite a plastic material comprising nanostructures of crystalline silicon and / or silicon quantum dots;
- a detector (4) of visible and infrared light;
- means for the sorting (5) of said plastic materials.

In particular, the means for transporting (2) a plurality of plastic materials in a distanced manner comprise a conveyor belt that moves the material through a system in which the materials to be separated are spaced apart from one another.

### EXAMPLES

### Example 1.

Synthesis and insertion of silicon nanocrystals in a colourless and transparent polymeric matrix:
1. The hydrogen silsesquioxane precursor is placed in a quartz container and is inserted into a suitable furnace, is then subjected to a thermal treatment at a final temperature of 1100°C, and is held at that temperature for an hour, in a reducing hydrogen atmosphere (for example nitrogen:hydrogen mixture of 95:5). Once ambient temperature has been reached again, the powder is extracted from the furnace and ground so as to obtain an increased uniformity;
2. 200 mg of the powder obtained from the previous phase are treated with hydrofluoric acid in order to remove the silicon oxide matrix and free the hydride-terminated silicon nanocrystals, having a diameter of approximately 3 nanometres;
3. approximately 20 mg of nanocrystals are thus obtained and are then functionalised with 1-dodecene (1.5 mmol), in toluene (1mL), by radical reaction initiated by 4-decyl benzene diazonium tetra fluoroborate salt (2 mg), at ambient temperature in insert atmosphere, for two hours.
4. The crystals thus obtained are purified from the excess alkenyl chains by three cycles of precipitation and washing with centrifuges, and lastly are suspended in organic solvent, for example toluene, so as to obtain a solution with micromolar concentration;
5. The nanocrystals obtained are suitably diluted at a concentration of approximately 10 ppm and freed from the solvent by means of evaporation and are enclosed within a polymeric matrix by thermal polymerisation in situ of a mixture of lauryl methacrylate/ethylene glycol dimethacrylate comprising 80 wt% lauryl methacrylate in relation to the weight of mixture and 20 wt% ethylene glycol dimethacrylate in relation to the weight of the mixture, in the presence of thermal initiator (lauroyl peroxide 0.05-0.1 wt% in relation to the solution). The mixture is degassed and poured into a suitable mould, and the reaction is then carried out at 80°C in a furnace, overnight.
6. At the end, the polymer is released from the mould and is provided in the form of a completely transparent rigid solid.
7. If subjected to UV illumination in the dark, the material demonstrates intense emission of red light.

### Example 2.

Synthesis and insertion of silicon nanocrystals in a black polymeric matrix (containing carbon black):
1. The hydrogen silsesquioxane precursor is placed in a quartz container and is inserted into a suitable furnace, is then subjected to a thermal treatment at a final temperature of 1100°C, and is held at that temperature for an hour, in a reducing hydrogen atmosphere (for example nitrogen:hydrogen mixture of 95:5). Once ambient temperature has been reached again, the powder is extracted from the furnace and ground so as to obtain an increased uniformity;
2. 200 mg of the powder obtained from the previous phase are treated with hydrofluoric acid in order to remove the silicon oxide matrix and free the hydride-terminated silicon nanocrystals, having a diameter of approximately 3 nanometres;
3. approximately 20 mg of nanocrystals are thus obtained and are then functionalised with 1-dodecene (1.5 mmol), in toluene (1mL), by radical reaction initiated by 4-decyl benzene diazonium tetra fluoroborate salt (2 mg), at ambient temperature in insert atmosphere, for two hours.
4. The crystals thus obtained are purified from the excess alkenyl chains by three cycles of precipitation and washing with centrifuges, and lastly are suspended in organic solvent, for example toluene, so as to obtain a solution with micromolar concentration;
5. The nanocrystals thus obtained are suitably diluted at a concentration of approximately 10 ppm and freed from the solvent by means of evaporation and are enclosed within a polymeric matrix by thermal polymerisation in situ of a mixture of lauryl methacrylate/ethylene glycol dimethacrylate comprising 80 wt% lauryl methacrylate in relation to the weight of mixture and 20 wt% ethylene glycol dimethacrylate in relation to the weight of the mixture, in the presence of thermal initiator (lauroyl peroxide 0.05-0.1 wt% in relation to the solution). The mixture, to which carbon black was added, is degassed and poured into a suitable mould, and the reaction is then carried out at 80°C in a furnace, overnight.
6. At the end, the polymer is released from the mould and is provided in the form of a black rigid solid.

If subjected to UV illumination in the dark, the material demonstrates intense emission of red light.

## Claims

1. Use of crystalline silicon nanostructures or silicon quantum dots to separate plastics, wherein said crystalline silicon or quantum silicon nanostructures have:
- emission life spans between 1 and 150 µs; and/or
- luminescence quantum yield between 1 and 100%; and/or
- emissions with a wavelength between 400 and 1000 nm.

2. Use according to claim 1 wherein said silicon crystalline or quantum silicon nanostructures have a nanocrystal diameter of between 1 and 20 nanometers.

3. Use according to claims 1 or 2 wherein said silicon nanostructures are obtained by thermal disproportion and subsequent treatment with hydrofluoric acid.

4. Use according to any one of Claims 1 to 3, wherein said silicon nanostructures are passivated with alkyl chains or functional organic or inorganic groups or hybrid and/or partially or totally oxidized and/or doped.

5. Use according to any one of the claims from 1 to 4, wherein said silicon nanostructures comprise silicon and/or porous silicon nanowires of sizes up to 200 nm.

6. Use according to any one of the claims from 1 to 5 for separating different plastics materials intended for recycling, wherein said plastics are selected from polyethylene, ethylene vinyl acetate, polyoxymethylene, polystyrene, polyamides, polyethylene terephthalate, polycarbonates, polypropylene, polyvinyl chloride, polyether ether ketone, aramides, polyimides, polysulfone.

7. Use according to any one of claims from 1 to 6,
wherein the concentration of said crystalline or quantum silicon nanostructures in said plastic material ranges from 1 to 100 ppm or from 1 to 100 ppb.

8. A method for separating plastics, in particular for separating different plastics materials intended for recycling, comprising the following steps:
i) Exciting a plurality of plastic materials by means of a UV lamp, wherein said plastics comprise silicon and / or quantum silicon nanostructures, wherein said crystalline silicon or quantum silicon nanostructures have:
- emission life spans between 1 and 150 µs; and/or
- luminescence quantum yield between 1 and 100%; and/or
- emissions with a wavelength between 400 and 1000 nm. ;
ii) detecting the signal emitted by said plurality of plastic materials by means of a light detector in the visible and/or in the infrared;
iii) separation of the plastic material based on the detected signals.

9. The method according to claim 8 comprising a further step preceding the excitation step i) wherein said plastic material is reduced into pieces.

## Patentansprüche

1. Verwendung von kristallinen Silizium-Nanostrukturen oder Silizium-Quantenpunkten zum Trennen von Kunststoffen, wobei die kristallinen Silizium- oder Quanten-Silizium-Nanostrukturen Folgendes aufweisen:
- eine Emissionslebensdauer zwischen 1 und 150 µs; und/oder
- eine Lumineszenz-Quantenausbeute zwischen 1 und 100 %; und/oder
- Emissionen mit einer Wellenlänge zwischen 400 und 1000 nm.

2. Verwendung nach Anspruch 1, wobei die kristallinen Silizium- oder Quanten-Silizium-Nanostrukturen einen Nanokristalldurchmesser zwischen 1 und 20 Nanometern aufweisen.

3. Verwendung nach Anspruch 1 oder 2, wobei die Silizium-Nanostrukturen durch thermische Disproportionierung und anschließende Behandlung mit Flusssäure erhalten werden.

4. Verwendung nach einem der Ansprüche 1 bis 3, wobei die Silizium-Nanostrukturen mit Alkylketten oder funktionellen organischen oder anorganischen Gruppen oder Hybriden passiviert und/oder teilweise oder vollständig oxidiert und/oder dotiert sind.

5. Verwendung nach einem der Ansprüche 1 bis 4, wobei die Silizium-Nanostrukturen Silizium und/oder poröse Silizium-Nanodrähte mit einer Größe von bis zu 200 nm umfassen.

6. Verwendung nach einem der Ansprüche 1 bis 5 zum Trennen verschiedener Kunststoffmaterialien, die zum Recycling bestimmt sind, wobei die Kunststoffe aus Polyethylen, Ethylenvinylacetat, Polyoxymethylen, Polystyrol, Polyamiden, Polyethylenterephthalat, Polycarbonaten, Polypropylen, Polyvinylchlorid, Polyetheretherketon, Aramiden, Polyimiden und Polysulfon ausgewählt sind.

7. Verwendung nach einem der Ansprüche 1 bis 6, wobei die Konzentration der kristallinen oder Quanten-Silizium-Nanostrukturen in dem Kunststoffmaterial im Bereich von 1 bis 100 ppm oder von 1 bis 100 ppb liegt.

8. Verfahren zum Trennen von Kunststoffen, insbesondere zum Trennen verschiedener Kunststoffmaterialien, die für das Recycling bestimmt sind, mit den folgenden Schritten:
I) Anregen einer Vielzahl von Kunststoffen mittels
einer UV-Lampe, wobei die Kunststoffe Silizium- und/oder Quanten-Silizium-Nanostrukturen umfassen, wobei die kristallinen Silizium- oder Quanten-Silizium-Nanostrukturen aufweisen:
- eine Emissionslebensdauer zwischen 1 und 150 µs; und/oder
- eine Lumineszenz-Quantenausbeute zwischen 1 und 100 %; und/oder
- Emissionen mit einer Wellenlänge zwischen 400 und 1000 nm;
II) Erfassen des von der Vielzahl von Kunststoffmaterialien emittierten Signals mittels eines Lichtdetektors im sichtbaren und/oder im infraroten Bereich;
III) Trennung des Kunststoffmaterials basierend auf den erfassten Signalen.

9. Verfahren nach Anspruch 8, das einen weiteren Schritt vor dem Anregungsschritt i) umfasst, wobei das Kunststoffmaterial in Stücke zerkleinert wird.

## Revendications

1. Utilisation de nanostructures de silicium cristallin ou de points quantiques de silicium afin de séparer des matières plastiques, dans lequel lesdites nanostructures de silicium cristallin ou de silicium quantique ont :
- des durées de vie d'émission comprises entre 1 et 150 µs ; et/ou
- un rendement quantique de luminescence compris entre 1 et 100 % ; et/ou
- des émissions d'une longueur d'onde comprise entre 400 et 1 000 nm.

2. Utilisation selon la revendication 1, dans laquelle lesdites nanostructures de silicium cristallin ou de silicium quantique ont un diamètre de nanocristal compris entre 1 et 20 nanomètres.

3. Utilisation selon les revendications 1 ou 2, dans laquelle lesdites nanostructures de silicium sont obtenues par dismutation thermique et traitement ultérieur à l'acide fluorhydrique.

4. Utilisation selon l'une quelconque des revendications 1 à 3, dans laquelle lesdites nanostructures de silicium sont passivées par des chaînes alkyle ou des groupes organiques ou inorganiques fonctionnels ou hybrides et/ou partiellement ou totalement oxydées et/ou dopées.

5. Utilisation selon l'une quelconque des revendications 1 à 4, dans laquelle lesdites nanostructures de silicium comprennent des nanofils de silicium et/ou de silicium poreux de tailles allant jusqu'à 200 nm.

6. Utilisation selon l'une quelconque des revendications de 1 à 5 permettant de séparer différentes matières plastiques destinées au recyclage, dans laquelle lesdites matières plastiques sont choisies parmi polyéthylène, éthylène-acétate de vinyle, polyoxyméthylène, polystyrène, polyamides, polyéthylène téréphtalate, polycarbonates, polypropylène, chlorure de polyvinyle, polyéther-éther-cétone, aramides, polyimides, polysulfone.

7. Utilisation selon l'une quelconque des revendications 1 à 6, dans laquelle la concentration desdites nanostructures de silicium cristallin ou quantique dans ladite matière plastique est comprise dans la plage allant de 1 à 100 ppm ou de 1 à 100 ppb.

8. Procédé de séparation de matières plastiques, en particulier de séparation de différentes matières plastiques destinées au recyclage, comprenant les étapes suivantes :
i) Excitation d'une pluralité de matières plastiques au moyen
d'une lampe UV, dans lequel lesdites matières plastiques comprennent des nanostructures de silicium et/ou de silicium quantique, dans lequel lesdites nanostructures de silicium cristallin ou de silicium quantique ont :
- des durées de vie d'émission comprises entre 1 et 150 µs ; et/ou
- un rendement quantique de luminescence compris entre 1 et 100 % ; et/ou
- des émissions d'une longueur d'onde comprise entre 400 et 1 000 nm. ;
ii) détection du signal émis par ladite pluralité de matières plastiques au moyen d'un détecteur de lumière dans le visible et/ou dans l'infrarouge ;
iii) séparation de la matière plastique sur la base des signaux détectés.

9. Procédé selon la revendication 8, comprenant une étape supplémentaire précédant l'étape d'excitation i) dans laquelle ladite matière plastique est réduite en morceaux.
